# EUROPÄISCHE PATENTSCHRIFT

(11) **EP 2 619 354 B1**
(45) Veröffentlichungstag und Bekanntmachung des Hinweises auf die Patenterteilung: **09.01.2019**
(21) Anmeldenummer: 11764105.0
(22) Anmeldetag: 22.09.2011
(51) Int. Cl.: C25F 5/00, C25F 1/00

(54) **VERFAHREN ZUM ENTSCHICHTEN VON WERKSTÜCKEN**
PROCESS FOR REMOVING A COATING FROM WORKPIECES
PROCÉDÉ DE DÉCAPAGE DE PIÈCES

(30) Priorität: 24.09.2010 DE 102010046372
(43) Veröffentlichungstag der Anmeldung: 31.07.2013
(73) Patentinhaber: Oerlikon Surface Solutions AG, Pfäffikon, 8808 Pfäffikon (CH)
(72) Erfinder: KOSTNER, Mirco, Elias, A-6020 Innsbruck (AT); RAUCH, Udo, A-6824 Schlins (AT)
(74) Vertreter: Kempkens, Anke
(86) Internationale Anmeldenummer: PCT/EP2011/004739
(87) Internationale Veröffentlichungsnummer: WO 2012/038083

(56) Entgegenhaltungen:
- EP-A1- 1 362 934
- US-A- 3 900 376
- CRISTOBAL A B ET AL: "Electrochemical stripping of hard ceramic chromium nitride coatings", THIN SOLID FILMS, ELSEVIER-SEQUOIA S.A. LAUSANNE, CH, Bd. 484, Nr. 1-2, 22. Juli 2005 (2005-07-22), Seiten 238-244, XP004921623, ISSN: 0040-6090, DOI: 10.1016/J.TSF.2005.03.006
- SEN Y ET AL: "Stripping of CrN from CrN-coated high-speed steels", SURFACE AND COATINGS TECHNOLOGY, ELSEVIER, AMSTERDAM, NL, Bd. 113, Nr. 1-2, 1. Januar 1999 (1999-01-01), Seiten 31-35, XP009105099, ISSN: 0257-8972, DOI: 10.1016/S0257-8972(98)00814-7

## Beschreibung

Die vorliegende Erfindung bezieht sich auf ein Verfahren zur Entschichtung von Werkstücken mit einer nichtleitenden Beschichtung, insbesondere von Zwei- oder Multischichtsystemen und/oder entsprechende Werkstückträger. Verfahren zur Entschichtung werden verwendet, um beispielsweise in Beschichtungsanlagen eingesetzte und dort zwangsläufig mitbeschichtete Werkstückträger von ihrer Beschichtung zu befreien und wieder für den Einsatz tauglich zu machen. Ausserdem werden Entschichtungsverfahren angewandt, um abgenützte oder fehlbeschichtete Werkstücke zu entschichten und damit eine Neubeschichtung vorzubereiten.

Zur Entschichtung abgenutzter und fehlbeschichteter Werkstücke werden u.a. elektrochemische Verfahren eingesetzt, wie zum Beispiel in WO 08/028 311 beschrieben. Dazu werden beispielsweise Entschichtungsanlagen verwendet, die eine Wanne zur Aufnahme eines flüssigen Elektrolyten umfassen, wobei im Inneren der Wanne eine an einen Pol einer Stromversorgungseinrichtung anschliessbare Gegenelektrode vorgesehen ist. Die meisten Entschichtungsanlagen weisen Mittel zur Aufnahme der zu entschichtenden Werkstücke auf. Die Werkstücke werden meist einzeln derart kontaktiert, dass sie als Anode und die Gegenelektrode als Kathode an einer Stromversorgungseinrichtung angeschlossen sind.

In der Anwendung wird die Wanne mit dem Elektrolyten gefüllt und das Werkstück in den Elektrolyten getaucht. Zwischen Werkstück und Gegenelektrode wird eine vorbestimmte konstante Spannung angelegt, welche die Entschichtung des Werkstückes zur Folge hat. Die Gegenelektrodenoberfläche muss so ausgebildet und positioniert sein, dass der Stromfluss möglichst gleichmässig über die zu entschichtenden Oberflächenbereiche der Werkstücke verteilt ist, damit eine gleichmässige Entschichtung erreicht und Korrosion der die Beschichtung tragenden Grundkörper vermieden wird.

Unterschiedliche Faktoren beeinflussen den Entschichtungsvorgang. Hierzu gehören u.a. die Temperatur, der verwendete Elektrolyt, die Spannung, der Strom, sowie die Geometrie, Position und der Abstand des Werkstücks in Bezug auf die Gegenelektrode. Dabei ist zu beachten, dass sich diese Faktoren auch gegenseitig beeinflussen. Beispielsweise führt ein Temperaturanstieg im Bad in der Regel zu einer erhöhten Leitfähigkeit. Ist das Bad spannungsgesteuert, so erhöht sich in diesem Fall der Stromfluss. Ist das Bad stromgesteuert, so führt dies zu einer geringeren Spannung. Dabei ist auch klar, dass unterschiedliche Elektrolyte zu einem unterschiedlichen Temperatur-Leitfähigkeitsverhalten führen.

Ein weiterer Faktor der den Entschichtungsprozess beeinflusst ist die Leitfähigkeit der abzutragenden Schicht oder Schichten. Ein Problem das bei der Entschichtung insbesondere von nicht leitfähigen Schichten auftreten kann ist die Beschädigung der Oberfläche des Grundkörpers dergestalt, dass diese nach der Entschichtung gemäss Stand der Technik mit statistisch verteilten Vertiefungen übersäht ist. Diese Vertiefungen werden im folgenden als Löcher bezeichnet.

Es lässt sich beobachten, dass bei höherer angelegter Spannung die Grösse der Löcher, d.h. die Beschädigung der Oberfläche zunimmt. Umgekehrt führt eine kleinere Spannung zu kleineren Löchern und damit zu einer geringeren Beschädigung der Substratoberfläche. Dies würde dafür sprechen, die Spannung möglichst gering zu wählen um eine möglichst geringe Beschädigung der Substratoberfläche zu erzielen. Allerdings führt dies zu langen Entschichtungszeiten, die den Entschichtungsprozess teuer und unter Umständen sogar unwirtschaftlich werden lassen. Wenn beispielsweise eine Spannung von 16V zu einer Entschichtungszeit von ca. 10Min und aber zu grossen Löchern führt, so kann es sein dass mit einer Spannung von lediglich 5V zwar die Oberfläche weitaus weniger beschädigt ist, der Entschichtungsprozess aber über 3 Stunden dauert. D.h. gemäss Stand der Technik muss ein Kompromiss zwischen akzeptabler Oberflächenbeschädigung und akzeptabler Entschichtungszeit gefunden werden.

Der während der Entschichtung an einer Phasengrenze Metall/Elektrolytlösung sich abspielende chemische Umsatz lässt sich mit Hilfe von Teilströmen I₁ und I₂ darstellen. I₁ repräsentiert dabei den mit der Metallauflösung verbundenen anodischen Teilstrom, I₂ repräsentiert den mit der Sauerstoffreduktion verbundenen Teilstrom. Wird keine Spannung angelegt so ist der resultierende Summenstrom I_{G} = 0, d.h. I₁ = I₂. Bei Einwirkung äusserer Ströme ändert sich der Summenstrom I_{G} und dementsprechend das Potential U(I_{G}). Dieser Vorgang heisst Polsarisation, der Differentialquotien ΔU/ΔI = R_{P} Polarisationswiderstand und sein Kehrwert Polarisationsleitwert. Gemäss der DE102004002763 ändert sich der gemessene Polarisationsstrom bzw. der gemessene Polarisationsleitwert als Funktion der angelegten Gleichspannung. Auf diese Weise kann demnach eine Polarisationsstrom-Steuerpotential-Kennlinie bzw. eine Polarisationsleitwert-Steuerpotential-Kennlinie ermittelt werden. In der DE102004002763 wird nun der Arbeitspunkt dort festgelegt, wo der Polarisationsstrom als Funktion des Gleichspannungspotentials ein Maximum annimmt, d.h. der Polarisationsleitwert den Wert Null annimmt. Leider ist dieser Ansatz lediglich für elektrisch leitende Beschichtungsmaterialien zielführend. Ist die äusserste Schicht Beschichtung eine nicht lediglich durch Umgebungsoxidation passivierte, sondern willentlich aufgebrachte elektrisch nicht leitende Schicht, so führt auch dieses Verfahren zu den oben beschriebenen inaktzeptablen Löchern.

In der DE19840471 und auch in der WO_9954528 werden ebenfalls elektrolytische Entschichtungsverfahren beschrieben, welche sich allerdings auch lediglich auf elektrisch leitend beschichtete Werkstücke beziehen.

Es besteht daher ein Bedürfnis nach einem Entschichtungsverfahren für Beschichtungen mit elektrisch nicht leitende Oberflächen, welches bei kürzerer Entschichtungszeit zu einer weniger beschädigten Oberfläche führt.

Es ist die Aufgabe der vorliegenden Erfindung ein Verfahren auf der Basis eines elektrochemischen Entschichtungsverfahrens anzugeben welches zu kurzen Prozessdauern führt, bei dem aber die Oberfläche des zu entschichtenden Werkstückes geschont wird.

Erfindungsgemäss wird die Aufgabe dadurch gelöst, dass die an das Werkstück angelegte Spannung im Verlauf des Entschichtungsprozesses erhöht wird. Erfindungsgemäss kann während eines Entschichtungsprozesses sowohl eine stufenweise als auch kontinuierliche Erhöhung gewählt werden. Der erfindungsgemäss gewählte Spannungsverlauf ist nicht notwendigerweise monoton. Wichtig ist allerdings, dass es zu Beginn des Entschichtungsprozesses eine Phase mit vergleichsweise niedriger Spannung gibt, welche dann im Verlauf der Entschichtung zumindest im Mittel erhöht wird. Bei einem solchen Spannungsverlauf hat sich erstaunlicherweise gezeigt, dass die Oberflächenbeschädigung weitaus geringer ausfällt als mit einem Verfahren das bei konstanter Spannung zu vergleichbaren Entschichtungszeiten führt.

Die Erfinder können nicht mit Sicherheit sagen warum die Oberfläche des Substrates einem ansteigenden Spannungsverlauf geschont wird. Es kann allerdings spekuliert werden, dass sich insbesondere bei der Entschichtung von nichtleitenden Schichten zunächst vereinzelte kleine Bereiche des leitenden Substrates freigelegt werden. In diesen lokalen Bereichen kommt es dann schlagartig zu einer Erhöhung der Stromdichte. Der gesamte Stromfluss konzentriert sich auf diese kleinen Bereiche. Hierdurch kommt es vermutlich zu einer lokal konzentrierten Erwärmung, was dort einerseits zu einer Erhöhung der Oxidationskraft führt. Dabei ist dann nicht auszuschliessen, dass Partikel aus der Schicht regelrecht herausgesprengt werden und Teile des Substrates mit sich reissen. Dies kann verhindert werden, indem anfangs eine so geringe Spannung angelegt wird, dass es nicht zu solchen Schäden kommt.

Wenn im Verlauf der Entschichtung immer grössere Bereiche des leitenden Substrates freigelegt sind nimmt bei konstantem Gesamtstromfluss die lokale Stromdichte erheblich ab. Nun kann die Spannung erhöht werden wodurch eine höhere Entschichtungsrate erzielt wird.

Darüber hinaus haben die Erfinder festgestellt, dass bei Verwendung eines erfindungsgemässen Spannungsverlaufes die Prozessstabilität deutlich verbessert wird und die durch Schwankungen der oben beschriebenen Faktoren den Entschichtungsprozess deutlich reduziert negativ beeinflussen. Dies gilt insbesondere auch für unterschiedlich gut kontaktierte Werkstücke.

Die Figuren:
Figur 1 zeigt eine typische Vorrichtung zur elektrolytischen Entschichtung von Werkstücken.
Figur 2 zeigt die Oberfläche eines jungfräulichen, d.h. bisher nicht beschichteten Werkstücks.
Figur 3 zeigt die Oberfläche eines mit einer konstanten Spannung von 8V entschichteten Werkstücks
Figur 4 zeigt die Oberfläche eines mit einer konstanten Spannung von 16V entschichteten Werkstücks
Figur 5 zeigt einen erfindungsgemässen Stufen-Prozess Verlaufs der Spannung
Figur 6 zeigt die Oberfläche eines Werkstücks welches mit dem Stufenprozessverlauf gemäss Figur 5 entschichtet wurde.

Die Erfindung wird nun anhand der Figuren und den Beispielen im Detail beschrieben.

Im Beispiel sollen sogenannte Tappets aus Stahl entschichtet werden, welche mit einer 2µm dicken CrN-Schicht und einer 2µm dicken DLC-Schicht beschichtet sind. D.h. es handelt sich im Beispiel um ein sogenanntes Zwei-Schicht-System.

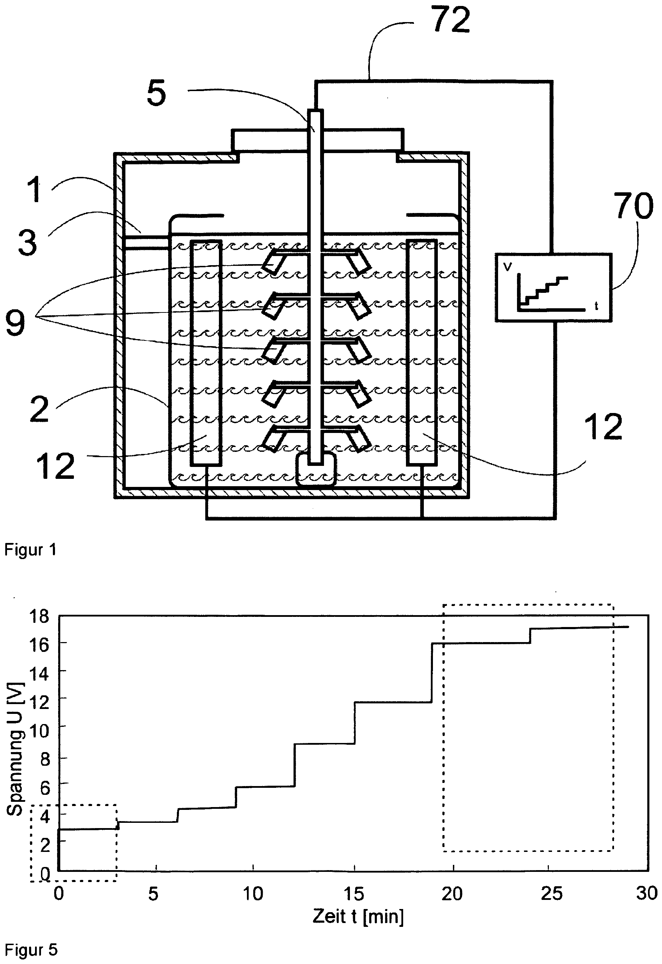

In Figur 1 ist eine Entschichtungsanlage abgebildet, welche ein quaderförmiges Gehäuse 1, das eine Wanne 2 enthält, welche aus nichtleitendem Material besteht oder an der Innenseite mit einem nichtleitendem Material beschichtet ist, sodass die Innenwand nichtleitend ist. Sie dient zur Aufnahme eines Elektrolyten. Neben der Wanne 2 ist ein Überlauf 3 mit einem Sieb oder Filter angeordnet.

Der Elektrolyt ist im Beispiel eine ca. 5 [Vol%] DECONEX HT1175 in Osmose-Wasser.

An eine Halterung 5 ist der eine Pol 72 einer zweipoligen regelbaren Spannungsquelle 70 angeschlossen. Im Betrieb ist die Halterung 5 mit zu entschichtenden Werkstücken 9 bestückt. Aus Gründen der Übersichtlichkeit zeigt die Referenz lediglich auf 3 der Werkstücke Die Spannungsquelle 70 ist als regelbare Spannungsquelle ausgebildet welche eine kontinuierliche und/oder stufige Regelung zulässt. Die Halterung 5 ist so mit dem Gehäuse 1 verbunden, dass sie ohne grossen Aufwand abgenommen werden kann.

Der andere Pol der Spannungsquelle 70 ist mit einer z.B. als Gitterelektrode ausgebildeten Gegenelektrode 12 verbunden, die im Inneren der Wanne 2 angeordnet ist. Die Gegenelektrode 12 weisst eine der Aufnahme zugewandte, sich im Wesentlichen über die ganze Höhe der Wanne 2 erstreckende Gegenelektrodenoberfläche auf.

In der Wanne 2 sind ausserdem eine Heiz- und Kühlvorrichtung angeordnet und ein Ultraschallgeber sowie ein Einlass für den Elektrolyten und Einrichtungen zur Bewegung desselben wie Pumpen oder Rührer (alle nicht dargestellt)

Im Betrieb ist die Wanne 2 bis mindestens nahe an den oberen Rand mit einem flüssigen Elektrolyten gefüllt. Die Halterung 5 wie auch alle anderen in der Wanne 2 angeordneten Komponenten der Entschichtungsanlage müssen aus einem Werkstoff bestehen, der vom Elektrolyten nicht angegriffen wird, gewöhnlich aus rostfreiem Stahl oder, wo dies nicht möglich ist, wie bei manchen magnetischen Werkstoffen, in rostfreier Folie gekapselt sein.

Die Spannungsquelle 70 erzeugt nun eine Potentialdifferenz zwischen Werkstück und Gegenelektrode deren Verlauf derjenigen aus Figur 5 entspricht.

Um den Vorteil des vorliegenden Verfahrens erfassen zu können, ist es hilfreich die Oberfläche von mit einem herkömmlichen Entschichtungsverfahren entschichteten Werkstücken und die eines neuen unbeschichteten Werkstückes mit derjenigen Oberfläche eines erfindungsgemäss entschichteten Werkstückes zu vergleichen.

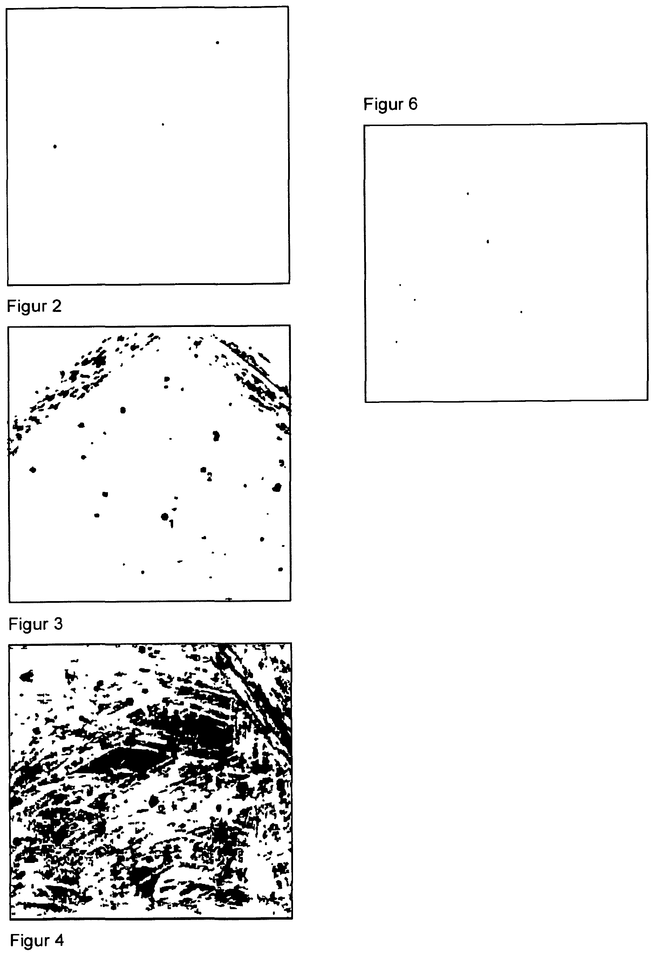

Figur 2 zeigt dementsprechend ein neues, unbeschichtetes Werkstück. Es hat lediglich sehr vereinzelt und kleine Oberflächendefekte, wie z.B. mit der "1" angedeutet. Dieser Defekt hat einen Durchmesser von lediglich 3µm. Demgegenüber zeigt Figur 3 die Oberfläche eines mittels einer konstanter Spannung von 8V entschichtetes Werkstückes. Eine solche Spannung führte zu einer Entschichtungszeit von ca. 2 Stunden. Das Werkstück entspricht dem Werkstück aus Figur 2. Es sind deutliche Oberflächendefekte zu sehen. Die Zahl der Oberflächendefekte hat zugenommen und auch deren Durchmesser, wie die Figur deutlich zeigt. Ausgemessen wurden drei Defektstellen "1", "2", "3", die einen Durchmesser zwischen 13µm und 18µm ergaben. Auch Figur 4 zeigt ein dem der Figur 1 entsprechendes Werkstück welches bei konstanter Spannung entschichtet wurde. Die während der Entschichtung angelegte Spannung betrug nun allerdings 16V. Hierdurch konnte die Entschichtungszeit auf 10 Minuten reduziert werden. Allerdings zeigt sich gegenüber Figur 3 dass die Anzahl der Defekte und deren Grösse wiederum dramatisch zugenommen hat. Beispielhaft wurden drei Defekte vermessen, deren Durchmesser zwischen 10µm und 36µm lag.

Demgegenüber zeigt die Figur 6 ein nach dem erfindungsgemässen Verfahren entschichtetes Werkstück. Das Werkstück entsprach wiederum demjenigen der vorangehenden. Entsprechend der Figur 5 wird während der ersten 3 Minuten die Spannung auf 3V gehalten. Diese sogenannte Sicherheitsstufe bildet die erste Phase der Entschichtung. Hierbei wird vermutlich an den feinen Poren zum Substrat Schichtmaterial abgetragen. Dadurch, dass die Spannung klein gehalten wird, fliesst zunächst insgesamt relativ wenig Strom. Ab der dritten Minute wird die Spannung leicht auf 3.5V erhöht. Es haben sich bereits Schichtlöcher zur Substratoberfläche gebildet, deren Ausdehnung ständig zunimmt. Vermutlich wird hauptsächlich am Schichtlochrand abgetragen. Mit zunehmender Schichtlochausdehnung nimmt auch der insgesamt vorhandene Rand zu, so dass die Gesamtstrommenge erhöht werden kann ohne das Substrat zu Beschädigen. Demgemäss wird ab der sechsten Minute auf 4.5V erhöht. Ab der neunten Minute wird eine Spannung von 6V eingestellt. Die Spannung wird ab der zwölften Minute auf 9V angehoben. Ab der 15ten Minute des Prozesses wird die Spannung auf 12V erhöht. Eine weitere Erhöhung der Spannung auf jetzt 16V wird ab der 19ten Minute durchgeführt. Ist dies die erste Entschichtung nach einer Erneuerung des Elektrolyten, so wird ab Minute 24 eine Spannung von 17.5V eingestellt. Insgesamt dauerte die Entschichtung also lediglich eine halbe Stunde. Dies ist deutlich weniger Zeit als bei einer Entschichtung mit Hilfe von konstant 8V benötigt wird. Trotz der geringeren Entschichtungszeit wird aber die Oberfläche, wie die Figur 6 deutlich zeigt, erheblich weniger beschädigt als im Fall mit konstant 8V. Im Vergleich zur unbehandelten Werkstückoberfläche gemäss Figur 2 nahm die Defektzahl nur unwesentlich zu. Die Defektgrösse lag mit 2µm und 4µm auch im Bereich der unbehandelten Oberfläche. Damit wurde also erreicht, dass trotz geringerer Entschichtungszeit eine weniger beschädigte Oberfläche erhalten wird.

Der zu wählende Spannungsverlauf wird bevorzugt an unterschiedliche Werkstückarten und unterschiedliche Schichtarten angepasst, um den Prozess zu optimieren. Wichtig ist allerdings dass mit kleiner Spannung angefangen wird und um Defekte zu vermeiden. Erfindungsgemäss wird dann diese Spannung gesteigert, um die benötigte Entschichtungszeit zu minimieren.

Es gibt unterschiedliche Möglichkeiten, wie der Fachmann zu einem optimierten Spannungsverlauf gelangen kann. Beispielsweise kann er in einer ersten Testreihe Entschichtungsdurchgänge mit konstanter, aber jeweils unterschiedlich hoher Spannung durchführen und somit überprüfen, bis zu welcher Spannung eine für ihn noch akzeptable, d.h. genügend intakte Oberfläche erhalten bleibt. Diese Spannung wird sodann als Startspannung V1 festgelegt.

In einer zweiten Testreihe wird er dann jeweils über ein Entschichtungsstartintervall EI1 diese ermittelte Startspannung V1 einstellen, nach diesem Entschichtungsstartintervall EI1 jedoch die Spannung erhöhen und ab dort wiederum jetzt konstanter aber pro Test unterschiedlicher Spannung weiter entschichten. Hiermit kann er überprüfen, wie hoch er die Spannung nach dem Startintervall wählen kann, ohne die Oberfläche zusätzlich zu schädigen. Die somit ermittelte Spannung V2, die betragsmässig grösser als V1 ist wird über das zweite Entschichtungsintervall EI2 wiederum konstant gehalten.

Es folgt eine Testreihe zum dritten Entschichtungsintervall EI3, wobei zunächst über EI1 mit V1, dann über EI2 mit V2 entschichtet wird und dann jeweils mit unterschiedlicher aber konstanter Spannung vollständig entschichtet wird. Auf diese Weise gelangt man zu einer maximalen Spannung V3, bei der die Oberfläche im Wesentlichen nicht weiter angegriffen wird.

Dem Fachmann obliegt die Wahl der Intervalle. Diese können alle gleich lange oder auch unterschiedlich lang gewählt werden. Je kleiner die einzelnen Entschichtungsintervalle sind, umso aufwändiger wird die Durchführung der Testreihen, umso besser kann jedoch der optimale Stufenprozess angenähert werden. Im Grenzfall kann sogar ein kontinuierlich ansteigender Spannungsverlauf erreicht werden. Ab einer bestimmten Intervallkürze kann dieser auch ohne weitere Testreihen interpoliert werden.

Vorzugsweise wird der erfindungsgemäss angelegte Spannungsverlauf monoton, besonders bevorzugt sogar streng monoton ansteigen. Allerdings sollte aus dem oben gesagten heraus klar sein, dass kurzzeitiges absenken der Spannung die Substratoberfläche nicht schädigen wird, so dass auch Spannungsverläufe als erfinderisch zu betrachten sind, die nicht monoton steigen, sondern über gewisse Bereich eine kleinere Spannung zulassen. Dies gilt insbesondere auch für angelegte Wechselspannungen, die beispielsweise in der Startphase auf kleine Amplituden limitiert sind und während des Schichtungsverlaufes sich zu höheren Amplituden aufschwingen. Testreihen analog zu den oben beschriebenen erlauben es dem Fachmann wiederum den optimalen Spannungsverlauf zu approximieren. Vorzugsweise handelt es sich bei den Schichten, welche von den Werkstücken entfernt werden sollen um poröse Schichten. Auf diese Art ist gewährleistet, dass es bei Anlegen einer schwachen Spannung bereits zu einem Stromfluss und damit zur elektrolytischen Reaktion kommt.

Ein Charakteristikum des diskutierten Verfahrens ist es, dass bei einem vollständig entschichteten Teil und weiter angelegter hoher Spannung (z.B. 16V) keine Schädigung des Substrates eintrat. Somit ist ein Abschaltkriterium für den Entschichtungsprozess unkritisch.

In den folgenden Beispielen wurde das erfindungsgemässe Verfahren anhand unterschiedlicher Schichten, Substraten und Elektrolyten getestet und mit dem Verfahren konstanter Spannung gemäss Stand der Technik verglichen:

### Beispiel 1: nicht zur Erfindung gehörig

Substrat: TiAl Legierung, wie z.B. im Rennsport für Komponente eingesetzt wird.
Schicht: CrC zwischen 3 - 5 µm
Elektrolyt: 5% Deconex HT1175
Spannungsverläufe:
   a) konstant 10 V für 7-10 min
   b) konstant 8 V für 10 - 15 min
   c) 3V 3 min, 5 V 5 min, 6 V 5 min,

Die Teile wurden mit den Verfahren a) - c) entschichtet, die Qualität der Entschichtung von a) - c) zu, was sich an einer Abnahme der Verfärbung des entschichteten Substrates von a) nach c) zeigt. Dementsprechend zeigt dass nach a) entschichtete Substrat starke Verfärbung, das nach b) entschichtete Substrat teilweise Verfärbung und das nach c) entschichtete Substrat nicht verfärbt.

### Beispiel 2: nicht zur Erfindung gehörig

Substrat: Stahl 1.2379 wie z.B. für Formenbau eingesetzt wird.
Schicht: CrN zwischen 3 - 5 µm
Elektrolyt: 2% NaOH
Spannungsverläufe:
   a) konstant 12 V für 7-15 min
   b) konstant 7.5 V für 10 - 25 min
   c) 2.5V 3 min, 5 V 5 min, 8 V 7 min, 10 V 7 min,

Die Teile wurden mit den Verfahren a) - c) entschichtet, die Qualität der Entschichtung nimmt von a) - c) zu.

### Beispiel 3:

Substrat: Stahl HSS (Wälzfräser) wie z.B. Für Werkzeuge eingesetzt wird.
Schicht: AICrN zwischen 3 - 5 µm
Elektrolyt: 5% Deconex HT1175
Spannungsverläufe:
   a) konstant 12 V für 7-15 min
   b) konstant 8 V für 10 - 25 min
   c) 2.5 V 3 min, 5 V 5 min, 8 V 7 min, 10 V 8 min,

Die Teile wurden mit den Verfahren a) - c) entschichtet, die Qualität der Entschichtung nimmt von a) - c) zu. Zur Entschichtung wurde eine zylindrische Kathode verwendet

### Beispiel 4:

Substrat: Hartmetall k - Typ (Bohrer) wie z.B. Für Werkzeuge eingesetzt wird.
Schicht: AICrN zwischen 3 - 5 µm
Elektrolyt: NH4/NO3/CH3COOH (siehe EP 1080254)
Spannungsverläufe:
   a) konstant 15 V für 3 - 60 s
   b) 2.8 V 10 s, 5 V 10 s, 8 V 10 s, 10 V 10 s,

Die Teile wurden einmal mit dem Verfahren a) und einmal mit dem Verfahren b) entschichtet, die Qualität der Entschichtung ist bei b) besser als bei a). Zur Entschichtung wurde eine zylindrische Kathode verwendet

Es wurde ein Verfahren zur Entschichtung von Werkstücken mit Beschichtungen mit elektrisch nicht leitenden Oberflächen wobei das Verfahren mittels Elektrolyt durchgeführt wird und folgende Schritte umfasst:
- Bereitstellen einer Wanne, wobei im Innern der Wanne eine an einen Pol einer Stromversorgungseinrichtung anschliessbare Elektrode vorgesehen ist
- Einfüllen eines Elektrolyten in die Wanne, so dass die Elektrode mit dem Elektrolyten in Kontakt kommt
- Eintauchen einer oder mehrerer Werkstücke in den Elektrolyten
- Anlegen einer Spannung zwischen Werkstück und Elektrode zur zumindest teilweisen Entschichtung des Werkstückes wobei die Spannung während der zumindest teilweisen Entschichtung so geregelt wird, dass zu einem ersten Zeitpunkt eine erste Sapnnung angelegt wird und zu einem späteren Zeitpunkt eine zweite, im Vergleich zur ersten Spannung höhere zweite Spannung angelegt wird welche nicht zur Entstehung von Löchern führt, wobei die Anlegung der höheren zweiten Spannung zum ersten Zeitpunkt zur Entstehung von Löchern geführt hätte.

Bevorzugt wird die Spannung während der zumindest teilweisen Entschichtung so geregelt, dass der Betrag der Potentialdifferenz zwischen Elektrode und Werkstück kontinuierlich und/oder stufenweise ansteigt.

Bevorzugt wird die Spannung insbesondere so geregelt, dass die Potentialdifferenz während der zumindest teilweisen Entschichtung monoton, bevorzugt streng monoton ansteigt.

Die Spannung kann auch so geregelt werden, dass am Anfang der Entschichtung über ein erstes Zeitintervall EI1 die Potentialdifferenz konstant auf einem ersten Wert U1 gehalten wird und die Potentialdifferenz in einem sich an das erste Zeitintervall anschliessende Zeitintervall EI2 konstant auf einem zweiten Wert U2 gehalten wird, wobei gilt U1<U2.

## Patentansprüche

1. Verfahren zur Entschichtung von leitenden Werkstücken mit Beschichtungen mit elektrisch nicht leitender Oberfläche, wobei das Verfahren mittels Elektrolyt durchgeführt wird und folgende Schritte umfasst:
- Bereitstellen einer Wanne, wobei im Innern der Wanne eine an einen Pol einer Stromversorgungseinrichtung anschliessbare Elektrode vorgesehen ist
- Einfüllen eines Elektrolyten in die Wanne, so dass die Elektrode mit dem Elektrolyten in Kontakt kommt
- Eintauchen einer oder mehrerer Werkstücke in den Elektrolyten
- Anlegen einer Spannung zwischen Werkstück und Elektrode zur zumindest teilweisen Entschichtung des Werkstückes
**dadurch gekennzeichnet, dass** die Spannung während der zumindest teilweisen Entschichtung so geregelt wird dass zu einem ersten Zeitpunkt eine erste Spannung angelegt wird und zu einem späteren Zeitpunkt eine zweite, im Vergleich zur ersten Spannung höhere zweite Spannung angelegt wird welche nicht zur Entstehung von Löchern führt, wobei die Anlegung der höheren zweiten Spannung zum ersten Zeitpunkt zur Entstehung von Löchern geführt hätte.

2. Verfahren nach Anspruch 1, **dadurch gekennzeichnet dass** die Spannung während der zumindest teilweisen Entschichtung so geregelt wird, dass der Betrag der Potentialdifferenz zwischen Elektrode und Werkstück kontinuierlich und/oder stufenweise ansteigt.

3. Verfahren nach einem der Ansprüche 1 und 2, **dadurch gekennzeichnet, dass** die Potentialdifferenz während der zumindest teilweisen Entschichtung monoton, bevorzugt streng monoton ansteigt.

4. Verfahren nach einem der vorangehenden Ansprüche, **dadurch gekennzeichnet, dass** die Spannung so geregelt wird, dass am Anfang der Entschichtung über ein erstes Zeitintervall EI1 die Potentialdifferenz konstant auf einem ersten Wert U1 gehalten wird und die Potentialdifferenz in einem sich an das erste Zeitintervall anschliessende Zeitintervall EI2 konstant auf einem zweiten Wert U2 gehalten wird, wobei gilt U1<U2.

## Claims

1. Process for removing a coating from conductive workpieces having coatings with an electrically non-conductive surface, wherein the process is carried out by means of an electrolyte and includes the following steps:
- preparing a tank, wherein inside the tank an electrode is provided that can be connected to one pole of a power supply device
- filling an electrolyte into the tank, so that the electrode comes into contact with the electrolyte
- immersing one or several workpieces into the electrolyte
- applying a voltage between the workpiece and the electrode for an at least partial removal of the workpiece's coating
**characterized in that** the voltage during the at least partial coating removal is adjusted in such a way that at a first point in time a first voltage is applied and at a later point in time a second voltage is applied that is higher than the first voltage and which does not result in the formation of holes, wherein the application of the higher second voltage at the first point in time would have resulted in the formation of holes.

2. Process according to claim 1, **characterized in that** the voltage during the at least partial removal of the coating is adjusted in such a manner that the value of the difference of potential between the electrode and the workpiece increases continuously and/or step by step,

3. Process according to one of the claims 1 and 2, **characterized in that** the difference of potential during the at least partial removal of the coating rises monotonously, preferably strictly monotonously.

4. Process according to one of the preceding claims, **characterized in that** the voltage is adjusted in such a way that at the beginning of the coating removal the difference of potential over a first time interval EI1 is maintained constant at a first value U1 and the difference of potential during a time interval EI2 directly subsequent to the first time interval is maintained constant at a second value U2, wherein U1<U2.

## Revendications

1. Procédé d'enlèvement de couches de pièces conductrices ayant des revêtements avec une surface électriquement non-conductrice, le procédé étant exécuté au moyen d'un électrolyte et comprenant les étapes suivantes:
- fournir une cuve, à l'intérieur de la cuve une électrode étant prévue qui peut être raccordée à un pôle d'un dispositif d'alimentation en courant
- verser un électrolyte dans la cuve de sorte que l'électrode entre en contact avec l'électrolyte
- Immerger une ou plusieurs pièces dans l'électrolyte
- appliquer une tension entre la pièce et l'électrode pour enlever du moins partiellement la couche de la pièce
**caractérisé en ce que** la tension est réglée pendant l'enlèvement du moins partiel de couches de telle manière qu'une première tension est appliquée à un premier moment et une seconde tension supérieure à la première tension est appliquée à un moment ultérieur, quelle seconde tension ne conduit pas à la formation de trous, tandis que l'application de la seconde tension supérieure au premier moment aurait conduit à la formation de trous.

2. Procédé selon la revendication 1 **caractérisé en ce que** la tension pendant l'enlèvement du moins partiel de couches est réglée de telle manière que la valeur de la différence de potentiel entre l'électrode et la pièce s'élève continuellement et/ou graduellement.

3. Procédé selon l'une des revendications 1 et 2 **caractérisé en ce que** la différence de potentiel pendant l'enlèvement du moins partiel de couches s'élève de manière monotone, de préférence de manière strictement monotone.

4. Procédé selon l'une des revendications précédentes **caractérisé en ce que** la tension est réglée de telle manière qu'au début de l'enlèvement de couches la différence de potentiel est maintenue constante à une première valeur U1 pendant un premier intervalle de temps EI1 et la différence de potentiel est maintenue constante à une seconde valeur U2 pendant un intervalle de temps EI2 suivant le premier intervalle de temps, avec U1<U2.
